# EUROPÄISCHE PATENTSCHRIFT

(11) **EP 0 575 018 B1**
(45) Veröffentlichungstag und Bekanntmachung des Hinweises auf die Patenterteilung: **18.06.1997**
(21) Anmeldenummer: 93250134.9
(22) Anmeldetag: 11.05.1993
(51) Int. Cl.: B23B 31/16, B23B 31/14

(54) **Spannsystem für Werkzeugmaschinen**
Clamping system for machine-tools
Système de serrage pour machines-outils

(30) Priorität: 15.06.1992 DE 4220136
(43) Veröffentlichungstag der Anmeldung: 22.12.1993
(73) Patentinhaber: Spur, Günter, Prof. Dr.-Ing. Drs. h.c., D-14193 Berlin (DE); Hündöl, Saltuk Dipl.-Ing., W-7812 Bad Krozingen (DE); Rudolph, Ulrich Dipl.-Ing., W-1000 Berlin 21 (DE); Stelzer, Carsten, Dipl.-Ing., W-1000 Berlin 46 (DE)
(72) Erfinder: Spur, Günter, Prof. Dr.-Ing. Drs. h.c., D-14193 Berlin (DE); Hündöl, Saltuk Dipl.-Ing., W-7812 Bad Krozingen (DE); Rudolph, Ulrich Dipl.-Ing., W-1000 Berlin 21 (DE); Stelzer, Carsten, Dipl.-Ing., W-1000 Berlin 46 (DE)
(74) Vertreter: Ninnemann, Detlef, Dipl.-Ing.

(56) Entgegenhaltungen:
- DE-A- 1 552 197
- US-A- 1 837 688
- US-A- 2 830 822
- US-A- 4 706 973
- WERKSTATTSTECHNIK, ZEITSCHRIFT FUR INDUSTRIELLE FERTIGUNG Bd. 68, Nr. 8, August 1978, BERLIN DE Seite 517 B.A. WHITE 'Neuartige Spannfutter erfüllen Anforderungen für hohe Drehzahlen'
- 1978, BERLIN DE Seite 517 B.A. WHITE 'Neuartige Spannfutter erf llen Anforderungen f r hohe Drehzahlen'
- PATENT ABSTRACTS OF JAPAN vol. 9, no. 7 (M-350)(1730) 12. Januar 1985 & JP-A-59 156 602 ( FUKUCHIYO )

## Beschreibung

Die Erfindung bezieht sich auf ein Spannsystem für Werkzeugmaschinen gemäß den Oberbegriffen der Ansprüche 1 und 6.

Der Einsatz moderner, geregelter Werkzeugmaschinen mit Antriebssystemen für hohe Bearbeitungsgeschwindigkeiten ermöglicht eine wesentliche Steigerung der Produktivität durch Verringerung der Bearbeitungszeiten infolge einer Erhöhung der Schnitt- und Vorschubgeschwindigkeiten. Die Antriebstechnik für die Hauptantriebe von Werkzeugmaschinen wird im allgemeinen den Forderungen der Hochgeschwindigkeitsbearbeitung nach hoher Drehzahl, Drehsteifigkeit und Dynamik gerecht. Auch erlauben beispielsweise bei der spanabhebenden Bearbeitung neue Schneidstoffe, wie Oxydkeramik und polykristalliner Diamant, wesentlich höhere Schnittgeschwindigkeiten, so daß diese Werkzeugmaschinenkomponenten eine Hochgeschwindigkeitsbearbeitung beispielsweise bei Zerspanungsvorgängen mit Schnittgeschwindigkeiten von 500 bis 10.000 Meter pro Minute zulassen.

Die maximal erreichbaren Bearbeitungsgeschwindigkeiten werden aber wegen der bei diesen hohen Schnittgeschwindigkeiten auf das Werkzeug bzw. Werkstück einwirkenden Kräfte und den dabei zu berücksichtigenden Sicherheitsaspekten bestimmt.

Da das Fertigungsverfahren "Drehen" mit etwa 30 % den größten Anteil innerhalb der spanenden Verfahren einnimmt, soll die bei diesem Fertigungsverfahren auftretende Problematik zum Erzielen der genannten hohen Schnittgeschwindigkeiten beispielhaft für die verschiedenen Fertigungsverfahren näher erläutert werden.

Da bei der Drehbearbeitung je nach Werkstückdurchmesser Drehzahlen von 8.000 bis 20.000 Umdrehungen pro Minute erforderlich sind, werden höchste Anforderungen an das Spindel-Lager-System sowie das Werkzeug- und das Werkstück-Spannsystem gestellt. Dabei wird bei Drehmaschinen zur Hochgeschwindigkeitsbearbeitung die sichere Werkstückeinspannung bei zunehmenden Drehzahlen schwieriger, da bedingt durch die sehr hohen Drehzahlen die Fliehkräfte beträchtlich ansteigen, so daß die Spannkräfte, die für die Fixierung des Werkstücks und die Drehmomentübertragung sorgen, bei einer äußeren Einspannung des Werkstücks abnehmen.

Eine Erhöhung der Spannkräfte ist einerseits nur bis zu vorgegebenen Belastungsgrenzen des Spannsystems möglich, andererseits verformen sich beispielsweise dünnwandige Werkstücke bei zu hohen Spannkräften, so daß sie unbrauchbar werden. Darüber hinaus wächst mit der im Spannsystem gespeicherten kinetischen Energie das Sicherheitsrisiko.

Von den verwendeten Spannsystemen ist das am häufigsten angewendete Spannzeug nach wie vor das Dreibackenfutter, da dieses entscheidende Vorteile gegenüber anderen Spannzeugen bietet. Dazu zählen die universelle Einsetzbarkeit über einen großen Durchmesserbereich, die einfache Umrüstbarkeit von Außen- auf Innenspannung und die eindeutig bestimmte Werkstücklage durch die Dreipunktspannung.

Wichtige Voraussetzung beim Fertigungsprozeß Drehen ist die Sicherstellung ausreichend hoher Werkstückhaltekräfte durch das Spannsystem der Maschine, d.h. durch das Dreibackenfutter im hier betrachteten Fall. Da technologiebedingt das Dreibackenfutter rotiert und somit die Spannkräfte einer zeitlichen Änderung unterliegen, ist der drehzahlabhängige Spannkraftverlauf von besonderem Interesse. Berücksichtigt man ferner, daß das Systemverhalten von Backenfuttern in der Regel nicht stationär ist, sondern von einer Fülle von Einflußgrößen, wie Reibungsbeiwert und Übersetzungsverhalten des Futtergetriebes, den Fliehkräften an den Spannbacken und den Steifigkeiten von Futter und Werkstück, abhängt, so kann das Drehfutter innerhalb des Bearbeitungsprozesses "Drehen" als schwächstes Glied angesehen werden.

In der Literaturstelle Spur, G. und Stelzer, C.: "Spannkraftsensoren in Dreibackenfuttern" (Zeitschrift für wirtschaftliche Fertigung, 86 (1991) 10, Seiten 512 bis 516) werden verschiedene Verfahren zur Erhöhung sowie Erfassung von Spannkräften bei kraftbetätigten Spannfuttern beschrieben. Danach ist es bekannt, die zulässigen Drehzahlen durch Einrichtungen zum Fliehkraftausgleich sowie durch gewichtsmindernde Bauweisen des Futterkörpers zu erhöhen.

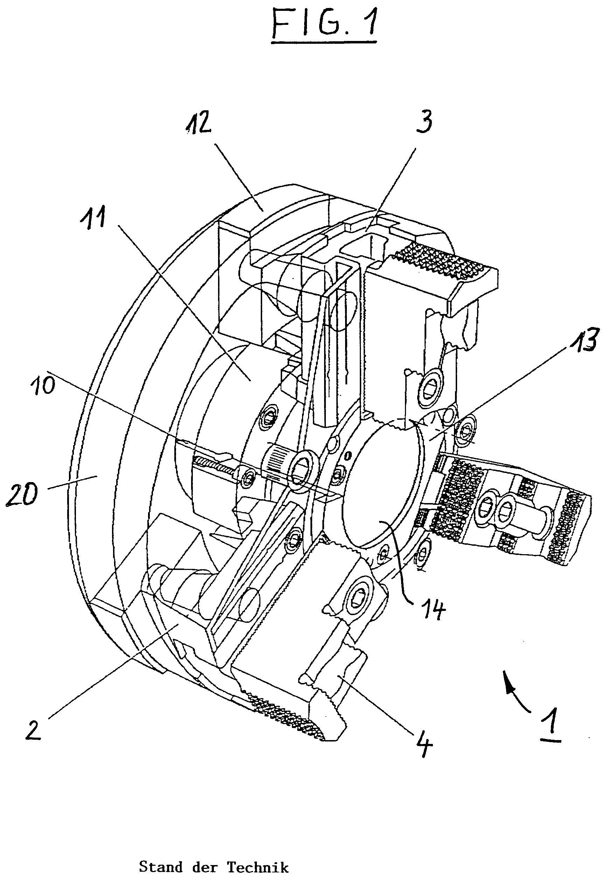

Zur Methode des Fliehkraftausgleichs soll nachfolgend beispielhaft die bei der Hochgeschwindigkeitsbearbeitung in Bezug auf die Lagersysteme und Werkzeug- und Werkstück-Spannsysteme auftretende Problematik anhand eines in Figur 1 dargestellten Dreibackenfutters als Spannsystem für den Fertigungsprozess "Drehen" näher erläutert werden.

Das in Figur 1 dargestellte Dreibackenfutter für Drehmaschinen besteht aus einem kraftbetätigten Keilhakenfutter mit Fliehkraftausgleich mit einem Futterkörper 2, einem Futterdeckel 20 zur universellen Spindelmontage und einem Gewindering 10 zum Anschluß des Spannfutters an ein nicht näher dargestelltes Zugrohr. Auf dem Futterkörper 2 sind Spannkolben 11 sowie Fliehgewichte 12 zur Kompensation von Spannkraftschwankungen bei steigender Drehzahl angeordnet. Auf einer mit den Fliehgewichten 12 verbundenen Grundbacke 3 sind radial über eine Spitzverzahnung oder eine Pflastersteinverzahnung verstellbar Aufsatzbacken 4 angeordnet, zwischen denen ein Werkstück zur spanabhebenden Bearbeitung eingespannt wird. Weiterhin weist das kraftbetätigte Keilhakenfutter mit Fliehkraftausgleich gemäß Figur 1 eine Schutzbüchse 13 sowie einen Stangendurchlaß 14 auf.

Das in Figur 1 dargestellte konventionelle Spannfutter für Drehmaschinen besteht somit im wesentlichen aus dem Futterkörper 2, 20 sowie dem Spanngetriebe mit den Spannkolben 11 und dem Fliehgewicht 12 und den Grundbacken 3 sowie den auf den Grundbacken 3 radial verschiebbar angeordneten Aufsatzbacken 4. Mit steigender Drehzahl verändern die hinter jeder Grundbacke 3 im Futterkörper radial beweglich angeordneten Fliehgewichte 12 aufgrund der auf sie einwirkenden Fliehkraft ihre radiale Lage in Richtung auf einen größeren radialen Abstand zum Mittelpunkt des Spannfutters und bewirken damit in Abhängigkeit von der Drehzahl ein Gegenmoment, das der Fliehkraftbeanspruchung an Grund- und Aufsatzbacke entgegenwirkt und eine Verschiebung der Grundbacken und damit der Aufsatzbacken 3 in Richtung auf den Drehmittelpunkt des Spannfutters bewirkt, so daß mit steigender Drehzahl die Spannkraft erhöht und damit ein Fliehkraftausgleich geschaffen wird.

Der Nachteil des Fliehkraftausgleichs besteht darin, daß die Ausgleichsmomente wegen der gleichbleibenden Hebelarmverhältnisse den verschiedenen Spannsituationen nicht angepaßt werden und bei identischen Ausgleichsgewichten die unterschiedlichen Steifigkeitsverhältnisse aufgrund der Art, Lage und Größe der Spannbacken sowie der Werkstückgeometrien keine Berücksichtigung finden. Zusätzlich führt die Anwendung beweglicher Massen zu einer erhöhten Beanspruchung des Futterkörpers. Durch die elastische Aufweitung des Futterkörpers unter Wirkung der Massen von Spannbacke und Ausgleichsgewicht kommt es bei sinkenden Drehzahlen zu einer Hysterese im Spannkraftverlauf. Im Stillstand des Futters macht sich diese Hysterese dann als erhöhte Spannkraft bemerkbar, die sich in Abhängigkeit von der maximal gefahrenen Drehzahl vergrößert. Besonders bei dünnwandigen Werkstücken wirkt sich dieser Effekt nachteilig aus, da unzulässige Verformungen auftreten können.

Neben dem mechanischen Fliehkraftausgleich wird die Problematik des Spannkraftverlustes in der Praxis zum Teil dadurch gelöst, daß die Betätigungseinrichtung des Spannfutters nach vorherbestimmten Kompensationskurven angesteuert wird. Es ist auch versucht worden, unabhängig vom Betriebszustand des Spannfutters die Spannkraft während des Bearbeitungsprozesses zu regeln. Dies kann jedoch nur gelingen, wenn eine kontinuierliche Überwachung der Werkstückhaltekräfte gewährleistet ist.

Zur Erfassung der Spannkraft von Drehfuttern iährend des Zerspanprozesses ist es aus der vorstehend genannten Literaturstelle bekannt, mit Dehnungsmeßstreifen in den Spannbacken ein Verfahren zur Ermittlung geeigneter Meßstellen durchzuführen, bei dem das Verformungsverhalten von Grund- und Aufsatzbacke mit der Finite-Elemente-Methode (FEM) zur Plazierung der Spannkraftsensoren ermittelt wird. Dabei wird der Einfluß der Krafteinleitung sowohl an der Spannstelle zwischen Aufsatzbacke und Werkstück als auch an der Keilfläche der Grundbacke und der Reibungseinfluß in den Backenführungen auf das Verformungsverhalten und der Verlauf der Bauteilspannungen analysiert. Mittels der so berechneten Anordnung der Spannkraftsensoren kann eine kontinuierliche Erfassung der Spannkräfte im Drehfutter als Voraussetzung für eine Grenzwertüberwachung sowie zum Aufbau von Einrichtungen zur Spannkraftregelung erfolgen.

Aus der DE 34 39 402 A1 ist eine Anordnung zur Erfassung der Spannkraft bei einem umlaufenden kraftbetätigten Spannfutter, das radial im Futterkörper geführte und durch ein im Futterkörper befindliches Antriebsglied verstellbare Spannbacken aufweist, bekannt. Im Kraftfluß zwischen dem Antriebsglied und mindestens einer der Spannbacken ist ein Spannkraft-Meßwertaufnehmer angeordnet, der ein der Größe des Kraftflusses proportionales elektrisches Spannkraftsignal erzeugt, das einer stationären Signalauswerteeinrichtung zugeführt wird. Das Spannkraftsignal und ein von einem Fliehkraftgeber erzeugtes, der Fliehkraft proportionales elektrisches Fliehkraftsignal werden bei Außenspannungen voneinander subtrahiert bzw. bei Innenspannungen zueinander addiert, um unabhängig von der radialen Stellung und der Masse der Spannbacken die tatsächlich an der Spannfläche der Spannbacken wirksame Spannkraft zu erfassen.

Aufgrund der mangelnden praxisgerechten Einsetzbarkeit dieser Spannkraftüberwachungssysteme wird neben der prozeßbegleitenden sensorgesteuerten Spannkrafterfassung an einer analytischen Vorherbestimmung des Spannkraftverlaufes festgehalten werden müssen. Nur so kann ein sicherer Prozeßablauf gewährleistet werden.

Weitere Neuentwicklungen, wie beispielsweise ein im Spannfutter integriertes Schmierstoffsystem, sollen für eine zuverlässigere Schmierung sorgen und somit zur Verbesserung der Betriebssicherheit beitragen.

Aus der DE 38 00 696 A1 ist es bekannt, bei einem Dehnspannwerkzeug das üblicherweise aus Stahl bestehende Dehnelement durch ein aus einem Faserverbundkunststoff bestehenden Dehnelement zu ersetzen, das direkt im Faserwickelverfahren auf einen Grundkörper aufgebracht wird. Die nicht durch den Faserverbundkunststoff substituierten Teile des Dehnelements und der konstruktive Aufbau des Dehnspannwerkzeugs bleiben im wesentlichen unverändert.

Aus der Druckschrift "Werkstattechnik, Zeitschrift für industrielle Fertigung, August 1978, Bd. 68, Nr. 8, Seite 517" ist es bekannt, bei Spannfuttern für hohe Drehzahlen in den Aufsatzbacken Aluminium-Grundkörper zu verwenden, in die Stahlbacken unterschiedlicher Größe eingesetzt werden, um die Masse der Aufsatzbacken und damit die Zentrifugalkraft zu verringern.

Aus der US-A-28 30 822 ist ein Zentrifugalspannfutter bekannt, bei dem mehrere Gewichte um einen Rotor angeordnet sind und sich bei Drehung des Rotors infolge der Zentrifugalkraft radial nach außen bewegen. Die Gewichte sind weiterhin mit einem Ring verbunden, der in Verbindung mit Klauen steht, die radial beweglich auf dem Rotor angeordnet sind. Durch die infolge der Zentrifugalkraft radial nach außen gerichtete Bewegung der Gewichte werden die Teile des Ringes, die mit den Gewichten verbunden sind, ebenfalls nach außen gedrückt, so daß die mit den dazwischenliegenden Teilen des Ringes verbundenen Klauen zusammengezogen werden.

Der vorliegenden Erfindung liegt die Aufgabenstellung zugrunde, ein Spannsystem für Werkzeugmaschinen mit einem verbesserten dynamischen Verhalten bezüglich der Spannkraft, erheblicher Massereduktion bei gleichem Bauvolumen, höheren Steifigkeiten, Verbesserung der Rundlauftoleranzen, geringerer Belastung des Spindel-Lager-Systems, erhöhter Betriebssicherheit und Dämpfung sowie wirtschaftlicher Herstellung anzugeben.

Diese Aufgabe wird erfindungsgemäß durch die Merkmale des Anspruchs 1 gelöst.

Die erfindungsgemäße Lösung geht von der Erkenntnis aus, daß bei einem konventionellen Spannfutter beispielsweise für Drehmaschinen, das aus einem Futterkörper, dem Spanngetriebe, den Grundbacken und den Aufsatzbacken besteht, der Spannkraft- abfall aufgrund der Fliehkräfte zum einen durch die Drehzahl und zum anderen wesentlich durch die Masse und den Schwerpunktabstand der Grundbacken und Aufsatzbacken beeinflußt wird.

Bei der erfindungsgemäßen Substitutionslösung werden die Stahlaufsatzbacken bzw. wesentliche Teile davon durch Komponenten aus Faserverbundkunststoff ersetzt, während der Futterkörper, die Grundbacken sowie die Schnittstelle zwischen Grund- und Aufsatzbacke unverändert belassen wird.

Allein eine Reduzierung der Aufsatzbackenmasse führt bereits bei gleichen Anfangsbedingungen zu einem flacheren Verlauf der Betriebsspannkraftkurve, wobei sich der dynamische Spannkraftverlauf zu höheren Drehzahlen verschiebt.

Dies zeigt, daß die Möglichkeit besteht, selbst bei einseitiger Reduktion der Aufsatzbackenmasse mit sonst identischen Spannbedingungen im Spannsystem vorhandene Nutzungsreserven auszuschöpfen. Darüber hinaus ist je nach Spannsituation an Stelle einer Erhöhung der zulässigen Drehzahl auch eine größere oder niedrigere Ausgangsspannkraft bei gleicher Drehzahlgrenze einstellbar. Die maximal zur Verfügung stehende Spannkraft ist dann lediglich durch den Wirkungsgrad des Spanngetriebes bzw. durch die herstellerseitig gemachten Angaben der Maximalbelastung begrenzt.

Eine hohe Ausgangsspannkraft ermöglicht eine Bearbeitung mit hoher Zerspanleistung. Bei dünnwandigen, verformungsempfindlichen Werkstücken wird eine geringere Ausgangsspannkraft angestrebt, um beispielsweise Formabweichungen möglichst gering zu halten.

Neben einer verbesserten Nutzung der vorhandenen Reserven der momentanen Drehfutterkonstruktion, die unter anderem zu einer optimalen Anpassung des Spannkraftverlaufs an die Prozeßbedingungen beiträgt, vermindert sich mit der Reduzierung der rotierenden Massen die im Spannsystem gespeicherte Energie. Dies trägt erheblich zur Betriebssicherheit bei, wenn infolge eines Bauteilversagens Spannmittelelemente, wie Aufsatz- oder Grundbacken, den Arbeitsraum der Maschine verlassen.

Die mit einer reinen Substitution verbundenen Nachteile bei der Gestaltung der Faserverbundkunststoff-Komponenten werden bei einer Optimierung von Aufwand und Nutzeffekt bewußt in Kauf genommen, um die vorhandenen Spannfutter-Komponenten weiterverwenden zu können und gleichwohl einen Einsatz auch bei Bruchgeschwindigkeitsdrehzahlen ermöglichen zu können.

Die Einbindung von Faserverbundkomponenten in das Werkzeugmaschinen-Gesamtsystem mit hohem gewichtsspezifischem Steifigkeits- und Festigkeitsverhalten führt zu einer wesentlichen Verbesserung des dynamischen Verhaltens des Gesamtsystems bei gleichzeitiger Erhöhung der Betriebssicherheit durch bessere Dämpfung und geringere Massen. Obwohl das Umfeld der Komponenten aus Faserverbundwerkstoffen nur wenig oder gar nicht verändert wird, führt allein eine Reduzierung der Masse eines Spannsystems sowie gegebenenfalls der Schwerpunktradien zu einem deutlich verbesserten dynamischen Spannkraftverlauf.

Faserverbundkunststoffe weisen im Vergleich zu Metallen in bevorzugten Richtungen hervorragende Festigkeits- und Steifigkeitskennwerte auf, die sich an die im Bauteil vorhandenen Spannungsfelder anpassen lassen. Von besonderer Bedeutung ist dabei die Anisotropie. So kann gegenüber den klassischen, isotropen Werkstoffen, wie Metalle, durch Anpassung des Verbundwerkstoffs das Steifigkeits- und Festigkeitsverhalten gezielt in Richtung der äußeren Kräfte beeinflußt werden. Außerdem zeichnen sich diese Werkstoffe neben gezielt steuerbaren Wärmedehnungen auch durch gute Dämpfung aus.

Als erster Verbundwerkstoff ist Reaktionsharzbeton wegen der hohen Werkstoffdämpfung und Wärmekapazität bereits für einige Gestellbauteile von Werkzeugmaschinen eingeführt worden. Die geringe Bauteilmasse bei hoher Steifigkeit, das gute Schwingungsverhalten sowie die geringe Wärmeausdehnung sind entscheidende Vorteile der neuen Strukturbauteile aus Kohlenstoffaserverbunden (CFK) im Werkzeugmaschinenbau. Dazu sind Spindeln unterschiedlicher Bau- und Fertigungsweisen zu zählen, als auch CFK-Roboterarme, Arbeitstische (Flachtische), Werkzeugschlitten, Hubbalken und Meßtaster.

Eine vorteilhafte Weiterbildung ist dadurch gekennzeichnet, daß der Laminatblock an der Spannfläche zum Werkstück oder Werkzeug mit einem Metalleinsatz, vorzugsweise einem Stahleinsatz, versehen ist.

Diese Form des Einsatzes von Faserverbundkunststoffen ermöglicht eine feste Verbindung mit den Werkstücken bzw. Werkzeugen, wobei wegen der Stahlverbindung mit dem Werkstück das Verbindungsstück beispielsweise durch Abdrehen in der gewohnten Weise an dessen Durchmesser anpassbar ist.

Weiterhin kann die der Grundbacke abgewandte Fläche des Laminatblocks abgeschrägt werden und einen Steigungswinkel von vorzugsweise 15° mit der der Grundbacke zugewandten Fläche bilden und beabstandet zueinander Bohrungen zur Aufnahme von Befestigungselementen unterschiedlicher Länge aufweisen.

Zur Erzielung maximaler Schub- und Biegesteifigkeiten und damit zur Optimierung des Laminataufbaus wird angestrebt, einen Laminatblock zu einem Faserverbund aus Faserschichten aufzubauen, die Orientierungswinkel von +/- 45° und 0° aufweisen, wobei die Faserschichten so angeordnet sind, daß die Einzelschichten senkrecht zum Futterkörper radial ausgerichtet sind. Damit kann in Abhängigkeit vom Schichtdickenverhältnis der Energieterm variiert und das Optimum bestimmt werden.

Die aufgeführten Bauteilbeispiele stellen im allgemeinen nur eine Substitution von metallischen Maschinenelementen dar. Mit der Einbindung in das maschinenbauliche System können oftmals die spezifischen Eigenschaften der faserverstärkten Kunststoffe nur begrenzt ausgenutzt werden, da die Werkstoffsubstitution nach Konstruktionsprinzipien erfolgt, wie sie aus dem Umgang mit Stahlwerkstoffen bekannt sind.

Ziel einer jeden Substitution muß neben der Betrachtung des neuen Bauteils an sich die Gewährleistung eines besseren Systemverhaltens sein, das sich nur durch eine gesamtheitliche Betrachtungsweise der Baugruppe oder kompletten Maschine realisieren läßt, in der faserverstärkte Verbundbauteile fasergerecht integriert werden.

Für ein Spannsystem mit mehreren, das Werkstück oder Werkzeug umfassenden Spannelementen, die in radialer Richtung beweglich auf einem Futterkörper angeordnet sind und zumindest teilweise aus Faserverbundkunststoffen ist es vorgesehen eine Bandage aus Faserverbundkunststoffen um die dem Werkstück oder Werkzeug abgewandte Rückseite der Spannelemente anzuordnen.

Diese integrierte Vorgehensweise ermöglicht eine Ausschöpfung der Nutzungsreserven bei erheblicher Massereduktion bei gleichem Bauvolumen sowie Steigerung der Steifigkeiten und Verbesserung der Rundlauftoleranzen.

Bei der integrierten Vorgehensweise wird von der Erkenntnis ausgegangen, daß eine bestehende oder neue Konstruktion so zu konzipieren ist, daß die spezifischen Konstruktionsbedingungen der Faserverbundwerkstoffe berücksichtigt werden. Dazu zählen die fasergerechte Krafteinleitungsgestaltung und das Anstreben möglichst großflächiger Konturen, so daß das den Faserverbundwerkstoffen innewohnende Potential, welches unter anderem aus der ausgeprägten Anisotropie resultiert, weitestgehend ausgenutzt werden kann.

Da bei einer Substitution die faserspezifischen Vorteile eines Faserverbundwerkstoffes nicht in vollem Umfange ausgenutzt werden können, ermöglicht die Neukonzeption des Spannfutters für die Hochgeschwindigkeitsdrehbearbeitung eine optimale Ausnutzung der faserspezifischen Vorteile der Faserverbundwerkstoffe, bei denen die Fasern in Längsrichtung ihre höchsten Steifigkeits- und Festigkeitseigenschaften aufweisen, was sie für den Einsatz bei Fliehkraftproblemen prädestiniert.

Mit der Lösung der Neukonzeption des Spannfutters werden die Fliehkräfte ausschließlich durch die Faserverbundkunststoff-Bandage aufgenommen, wobei die Bandage starr ausgeführt ist und nach einem weiterführenden Merkmal der Erfindung die Faserlängsrichtung der Bandage aus Faserverbundkunststoffen von Spannelement zu Spannelement ausgerichtet ist.

Eine weitere vorteilhafte Ausgestaltung der erfindungsgemäßen Lösung ist dadurch gekennzeichnet, daß an der Bandage aus Faserverbundkunststoffen zwischen den Spannbacken Fliehkraft-Ausgleichsgewichte so angeordnet sind, daß sie zusammen mit der Bandage aus Faserverbundkunststoffen in radialer Richtung beweglich und in tangentialer Richtung festgelegt sind.

Aufgrund der abgestimmten Fliehkraftgewichte, die an der Bandage aus Faserverbundkunststoffen jeweils in der Mitte zwischen zwei Backen befestigt sind, ist es möglich, die trotzdem noch auftretenden Spannkraftverluste zu kompensieren.

Nach einem weiteren Merkmal der erfindungsgemäßen Lösung sind die Spannelemente auf einem metallischen, mit einer Spindel verbundenen Grundkörper angeordnet und bestehen aus radial beweglichen Spannbacken, Stempel und Hülsen sowie axial beweglichen Spannklötzen, wobei die Spannklötze einerseits an einem axial beweglichen Spannring und andererseits über eine schiefe Ebene an den Spannelementen anliegen, so daß bei einer axialen Bewegung des Spannrings die Spannklötze vom Grundkörper weg bewegt und die Spannelemente in radialer Richtung zum Mittelpunkt des Grundkörpers bewegt werden.

Durch die starre Ausführung der Bandage aus Faserverbundwerkstoffen und in Folge der Klemmung des Werkstückes durch axiales Verschieben der Bandage auf konischen Führungen, welche mit dem Werkstück verbunden sind, wird die Bandage verspannt und kann so die auftretenden Fliehkräfte aufnehmen.

Infolge des Aufbaus des Spannfutters auf einen metallischen Futterkörper und durch die Trennung der Komponenten innerhalb der Bandage durch radial bewegliche Führungen von der Aufweitung des Futtergrundkörpers wird erreicht, daß die Fliehkraftaufweitung des Futterkörpers keinen Einfluß auf die Spannkraft hat. Durch diesen Spannmechanismus treten keine Schubspannungen, sondern ausschließlich Normalspannungen auf.

Anhand von in der Zeichnung dargestellten Ausführungsbeispielen soll der der Erfindung zugrundeliegende Gedanke näher erläutert werden. Es zeigen:
- Figur 1: eine schematisch-perspektivische Darstellung eines Dreibackenfutters mit Fliehkraftausgleich für Drehmaschinen;
- Figur 2: eine perspektivische Darstellung einer Aufsatzbacke mit Faserverbundkunststoff-Komponenten;
- Figur 3: ein Diagramm zur Darstellung des Spannkraftverlustes in Abhängigkeit von der Drehzahl;
- Figur 4: eine Schnittdarstellung verschiedener Befestigungsalternativen für Aufsatzbacken;
- Figur 5: eine schematische Darstellung einer Draufsicht auf ein Faserverbundkunststoff-Spannfutter mit einer Bandage und Fliehkraft-Ausgleichsgewichten;
- Figur 6: einen Schnitt durch die schematische Darstellung gemäß Figur 5 entlang der Linie A-A;
- Figur 7: eine detaillierte Draufsicht auf ein Faserverbundkunststoff-Spannfutter für Drehmaschinen mit Bandage und Fliehkraft-Ausgleichsgewichten und
- Figur 8: einen Schnitt durch die Anordnung gemäß Figur 7.

Die nachfolgende Beschreibung des erfindungsgemäßen Spannsystems soll exemplarisch an einem Dreibackenfutter für Drehmaschinen erfolgen. Das Erfindungsprinzip ist jedoch auch auf andere Spannsysteme unter Beachtung der konstruktiven Besonderheiten der betreffenden Werkzeugmaschine sowie des betreffenden Spannsystems übertragbar.

Im Zusammenhang mit der Erläuterung des Standes der Technik wurde anhand von Figur 1 ein Dreibackenfutter erläutert, bei dem der Spannkraftabfall aufgrund der auf die Spannfutterelemente einwirkenden Fliehkräfte neben der Drehzahl wesentlich durch die Masse und den Schwerpunktabstand der Grundbacken 3 und der Aufsatzbacken 4 beeinflußt wird. Durch Substitution der Stahlgrundbacken bzw. Stahlaufsatzbacken oder Teilen davon durch Komponenten aus Faserverbundkunststoff ist sowohl eine Reduzierung der Massen als auch Verringerung der Schwerpunktradien möglich, so daß mit dieser Maßnahme einem Spannkraftabfall aufgrund der Fliehkräfte entgegengewirkt werden kann.

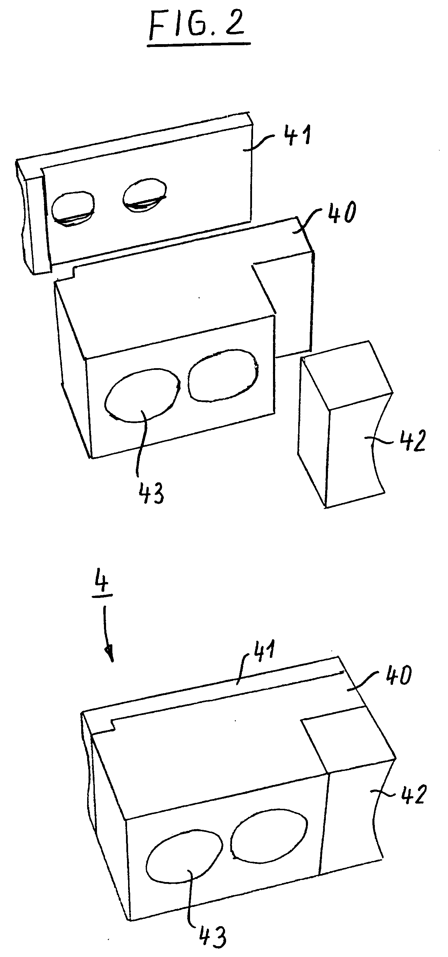

Figur 2 zeigt in einer Explosionsdarstellung sowie im zusammengesetzten Zustand eine perspektivische Darstellung einer Aufsatzbacke, bei der Stahlkomponenten durch Komponenten aus Faserverbundkunststoff (FVK) ersetzt wurden. Bei dieser Lösung wurden der Futterkörper 2, 20, die Grundbacken 3 sowie die Schnittstelle zwischen Grund- und Aufsatzbacke unverändert belassen.

Die dargestellte Aufsatzbacke mit einer Faserverbundwerkstoff-Komponente ist Teil einer Spannbacke für ein Drehfutter, die die Teilfunktionen "Werkstück halten" und "Positionieren" erfüllt. Die Bauteilgeometrie ist ähnlich der einer Stahlbacke, jedoch sind für dieses Bauteil aus Faserverbundkunststoff neben den bekannten Restriktionen und Forderungen spezielle Anforderungen zu erfüllen, die den Laminataufbau der Spannbacke bestimmen.

Die Aufsatzbacke 4 gemäß Figur 2 setzt sich aus einem Verbindungsteil 41 aus Stahl, einem Laminatblock 40 und einem Einspannteil 42 aus Stahl, die die Verbindung zum Werkstück herstellt, zusammen.

Neben dem Laminatblock 40 besteht die Aufsatzbacke aus den wenigen Stahleinsätzen, die an den Schnittstellen zur Grundbacke mit dem Verbindungsteil 41 und an der Spannfläche zum Werkstück mit dem Einspannteil 42 vorgesehen sind. Dabei besteht weiterhin die Möglichkeit, an dem Einspannteil 42, das die Spannfläche zum Werkstück darstellt, durch einfaches Abdrehen der Einspannfläche die Oberflächengeometrie des Einspannteils 42 der Oberflächengeometrie des Werkstücks anzupassen, wie dies bei herkömmlichen Spannbacken durchführbar ist. Die Bohrungen 43 dienen zur Aufnahme von Befestigungsschrauben zur Befestigung der in Figur 2 dargestellten Aufsatzbacke an einer Grundbacke eines Drehfutters.

Mit der in Figur 2 dargestellten Konstruktion einer Aufsatzbacke unter Einsatz von Faserverbundkunststoff-Komponenten als Teil einer Aufsatzbacke ist ein deutlich verbessertes dynamisches Verhalten des Spannsystems sowie ein deutlicher Zugewinn an Sicherheit zu erzielen.

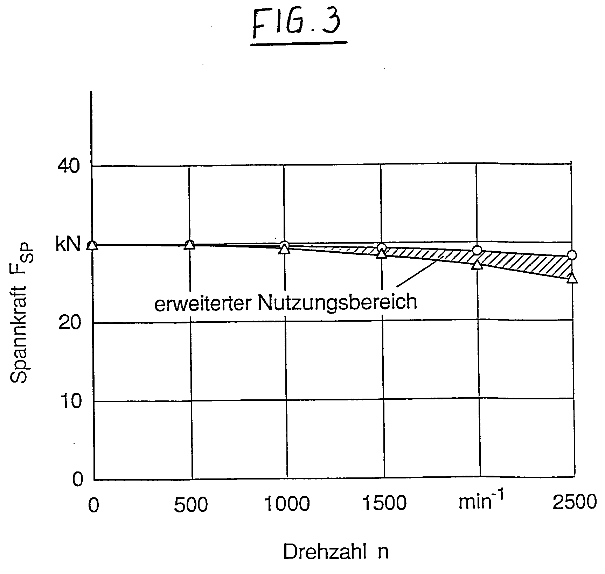

Figur 3 zeigt in einer graphischen Darstellung den Verlauf der Spannkraft F_{SP} über der Drehzahl und verdeutlicht den erweiterten Nutzungsbereich durch den Einsatz einer Faserverbundkunststoff-Komponente in der Aufsatzbacke gegenüber einer gleichartigen Aufsatzbacke aus Stahl. Wie die graphische Darstellung verdeutlicht, vergrößert sich der Nutzungsbereich zu größeren Drehzahlen immer mehr, so daß eine deutliche Verbesserung eines Drehfutters mit Faserverbundkunststoff-Komponenten gegenüber einer Aufsatzbacke ausschließlich aus Stahl konstatiert werden kann. Damit werden Nutzungsreserven ausgeschöpft, ohne daß eine Neukonstruktion des Gesamtsystems "Drehfutter" durchgeführt wurde.

Bei der Substitution von Stahl-Aufsatzbacken durch Komponenten aus Faserverbundkunststoff mit unveränderter Übernahme der sonstigen Teile eines Drehfutters, nämlich einem unveränderten Belassen des Futterkörpers, der Grundbacken sowie der Schnittstelle zwischen Grund- und Aufsatzbacke sind bei der Gestaltung der Faserverbundkunststoff-Komponenten Nachteile in Kauf zu nehmen, damit die vorhandenen Spannfutter-Komponenten weiterverwendet werden können.

Diese Nachteile bestehen insbesondere darin, daß bei der Befestigung der Aufsatzbacke auf der Grundbacke bei einer Eins-zu-eins-Substitution der Stahlkonstruktion die Backenstruktur aufgrund ungünstig angebrachter Bohrungen nur auf der halben Breite Schubspannungen übertragen kann und die Aufsatzbacken überwiegend auf Schub beansprucht werden. Die Positionen und die Geometrie der Befestigungsbohrungen der Stahlkonstruktion würden dabei den Faserverlauf der Aufsatzbacke mit Faserverbundkunststoff-Komponenten unterbrechen.

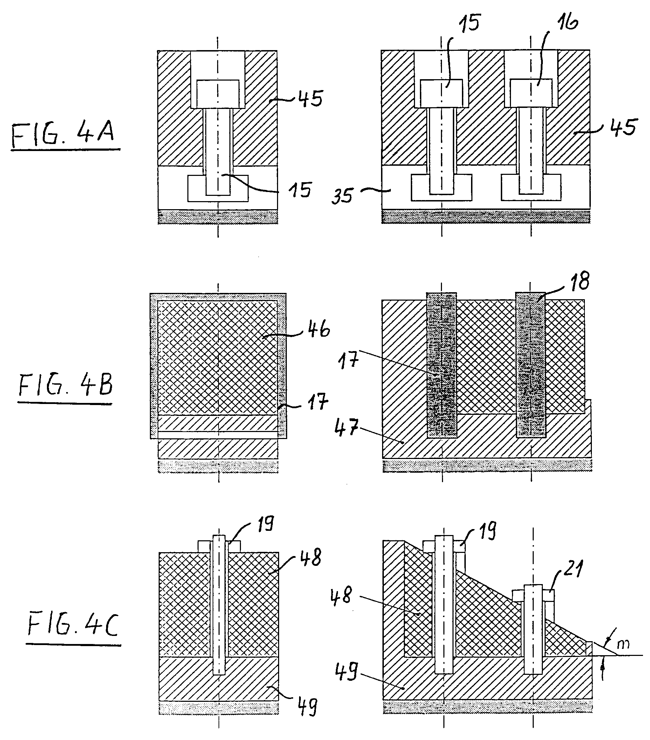

Figur 4 zeigt Schnitte durch Aufsatzbacken im Bereich der Befestigungsmittel, wobei Figur 4A die Befestigung einer Stahl-Aufsatzbacke 45 an einer Grundbacke 35 mittels Schrauben 15, 16 zeigt.

Durch Modifikation der Schraubenverbindung kann erreicht werden, daß nur ein geringer Teil des Faserverlaufs der Faserverbundkunststoff-Aufsatzbacke gestört wird. Figur 4B zeigt eine Bandagenlösung zur Befestigung der Aufsatzbacke, bei der die Faserverbundkunststoff-Komponente 46 der Aufsatzbacke durch in Schlaufen gelegte Bandagen 17, 18 an dem Stahlteil 47 der Aufsatzbacke befestigt wird, wobei die Bandagen 17, 18 die Faserverbundkunststoff-Komponente 46 der Aufsatzbacke vollständig umschließen.

Eine modifizierte Schraubenbefestigung ist in Figur 4C dargestellt, bei der eine keilförmige Faserverbundkunststoff-Komponente 48 mittels Schrauben 19, 21 an dem winkelförmigen Stahlteil 49 der Aufsatzbacke befestigt wird, wobei die Befestigungsschrauben 19, 21 wegen der Keilform der Faserverbundkunststoff-Komponente 48 unterschiedliche Baulängen aufweisen.

Der wesentliche Vorteil der in Figur 4B dargestellten Bandagenlösung besteht darin, daß dies die fasergerechteste Lösung darstellt, weil die Krafteinleitung flächenförmig erfolgt. Die Krafteinleitung stellt dabei das wesentlichste Problem bei der Substitution von Stahlteilen eines Spannsystems durch Faserverbundwerkstoffe bzw. Faserverbundwerkstoff-Komponenten dar. Bei einer unveränderten Übernahme der Anschlußmaße der einzelnen Komponenten eines Spannsystems erstrecken sich die Möglichkeiten zur Verringerung auftretender Spannkraftverluste auf eine Gestaltungsoptimierung, eine Optimierung des Laminataufbaus der Faserverbundwerkstoffe, die Krafteinleitung sowie auf die Werkstoffauswahl.

Zur Minimierung des Spannkraftverlustes muß die Fliehkraftaufweitung in radialer Richtung an der Krafteinleitungsstelle bei einer Drehzahl von 8.000 Umdrehungen pro Minute möglichst gering gehalten werden. Da die Anschlußmaße der Aufsatzbacken konstant gehalten werden, kann die Gestaltungsoptimierung nur in den Bereichen durchgeführt werden, die nicht durch die Schnittstelle eingeschränkt sind. Aus diesem Grunde wurde als freier Parameter der Steigerungswinkel m der Fläche der Aufsatzbacke, die der Grundbacke abgewandt ist, ausgewählt. Diese Verhältnisse sind in Figur 4C dargestellt, wo die Faserverbundkunststoff-Komponente 48 der Aufsatzbacke einen optimierten Verlauf zur Minimierung des Spannkraftverlustes aufweist.

Zur Optimierung des Laminataufbaus und damit zur Optimierung der Aufsatzbacke wird vorausgesetzt, daß nur Faserschichten mit Orientierungswinkeln von ±45° und 0° Verwendung finden, da bei diesen Winkeln maximale Schub- und Biegesteifigkeiten vorliegen. Die Materialeigenschaften der Einzelschichten sind bekannt, so daß der Aufbau des Faserverbundes von ±45°-Schichten und 0°-Schichten berechnet werden kann. In Abhängigkeit des Schichtdickenverhältnisses wird der Energietherm variiert und das Optimum bestimmt.

Die Laminatschichten werden so angeordnet, daß die Einzelschichten senkrecht zum Futterkörper in radialer Ausrichtung vorliegen. Die Ergebnisse der Berechnung zeigen, daß die Aufsatzbacken im wesentlichen auf Schub beansprucht werden, so daß eine Faserorientierung von ±45° sinnvoll ist. Die Geometrie der Spannbacke ist so zu wählen, daß der Winkel m = 15° beträgt. Dies ist mit dem überwiegenden Einfluß der Schubbeanspruchung und der damit verbundenen Schubverformung zu begründen. Der Bauteilbereich, der der Krafteinleitung in radialer Richtung gegenüberliegt, trägt nur gering zur Schubabstützung bei. Aufgrund des größeren Schwerpunktgrades und den damit verbundenen höheren Fliehkräften hat dieser Bereich jedoch einen großen Anteil an der fliehkraftbedingten Aufweitung der Aufsatzbacken. Eine Analyse macht deutlich, daß es sich bei der Dimensionierung der Aufsatzbacke für diese Drehzahlen in erster Linie um ein Steifigkeitsproblem und nicht um ein Festigkeitsproblem handelt.

Der Vorteil, der durch die Verwendung von Aufsatzbacken mit Faserverbundkunststoff-Komponenten erzielt wird, kann dem in Figur 3 dargestellten Spannkraftverlauf entnommen werden. Der Einsatzbereich des Spannfutters und die Drehzahlgrenzen lassen sich dadurch gezielt nach oben verschieben. Von entscheidender Bedeutung für die Verwendung von Aufsatzbacken mit Faserverbundkunststoff-Komponenten ist die erhöhte Sicherheit für den Fall, daß sich die Spannbacke durch Versagen vom Futter löst. Die kinetische Energie einer Aufsatzbacke mit Faserverbundkunststoff-Komponenten liegt wesentlich unter denen vergleichbarer Stahlaufsatzbacken.

Während bei einer Substitution von Stahlteilen eines Spannsystems durch Faserverbundkunststoff-Komponenten die faserspezifischen Vorteile der Faserverbundkunststoffe nicht in vollem Umfange ausgenutzt werden können, werden bei einer integrierten Lösung, bei der für die Hochgeschwindigkeitsdrehbearbeitung das gesamte Spannfutter neu konzipiert wird, diese faserspezifischen Vorteile in vollem Umfange ausgenutzt, wobei die Fasern in Längsrichtung ihre höchsten Steifigkeits- und Festigkeitseigenschaften aufweisen, was sie für den Einsatz bei Fliehkraftproblemen prädestiniert.

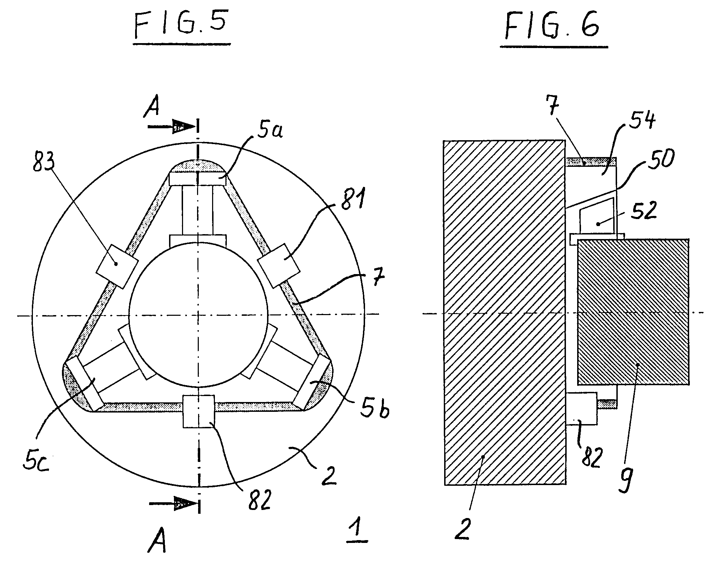

Figur 5 zeigt in einer schematischen Draufsicht und Figur 6 in einem Längsschnitt entlang der Linie A-A gemäß Figur 5 eine Neukonzeption eines Spannfutters für Drehmaschinen mit drei Spannelementen 5a, 5b, 5c, deren dem eingeklemmten Werkstück abgewandte Seiten mittels einer Bandage 7 aus Faserverbundwerkstoff verspannt sind. Die Bandage 7 ist starr ausgeführt, die Klemmung des Werkstücks 9 erfolgt durch axiales Verschieben der Bandage 7 auf konischen Führungen 50, welche über einen Kolben 52 aus Faserverbundkunststoff mit dem Werkstück 9 verbunden sind. Dadurch wird die Bandage 7 verspannt und kann so die bei der Rotation auftretenden Fliehkräfte aufnehmen.

Das Spannfutter ist auf einem metallischen Futterkörper 2 aufgebaut und so gestaltet, daß die Fliehkraftaufweitung des Futterkörpers 2 keinen Einfluß auf die Spannkraft hat. Dies wird erreicht, indem die Komponenten innerhalb der Bandage 7 durch radial bewegliche Führungen von der Aufweitung des Futterrundkörpers getrennt sind. Durch diesen Spannmechanismus treten keine Schubspannungen, sondern nur Normalspannungen auf.

Aufgrund abgestimmter Fliehkraftgewichte 81, 82, 83, die an der Bandage 7 aus Faserverbundkunststoff jeweils in der Mitte zwischen zwei Backen 5a, 5b, 5c befestigt sind, ist es möglich, die Spannkraftverluste zu kompensieren. Mit dem in den Figuren 5 und 6 schematisch dargestellten Spannfutter lassen sich beispielsweise bei einem maximalen Spanndurchmesser von 90 mm Drehzahlen bis zu 15.000 Umdrehungen pro Minute erreichen.

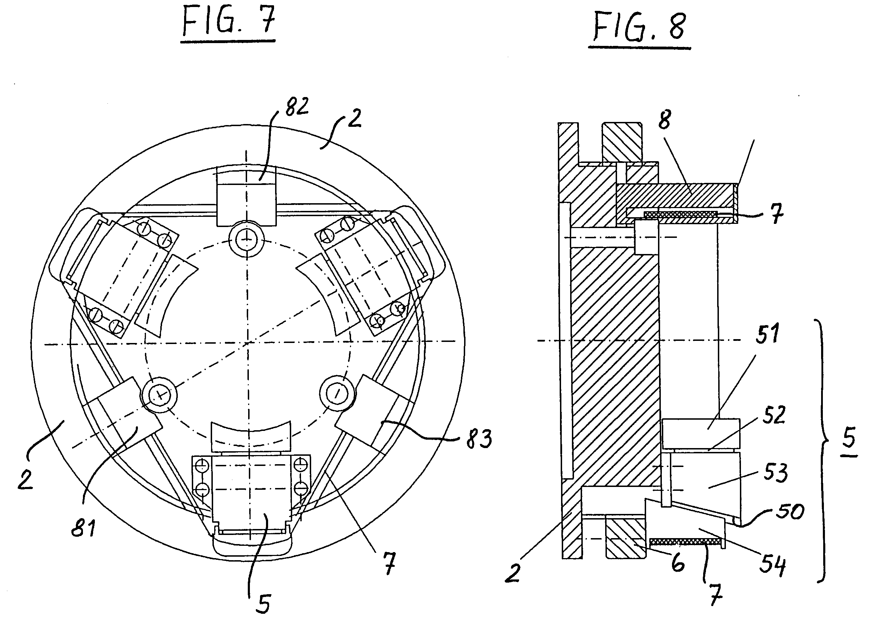

In den Figuren 7 und 8 sind Details der in den Figuren 5 und 6 prinzipiell dargestellten integrierten Lösung dargestellt. Figur 7 zeigt eine Draufsicht auf ein Spannfutter mit integriertem Einsatz von Faserverbundkunststoff-Komponenten und Figur 8 einen Längsschnitt durch das Dreibacken-Spannfutter gemäß Figur 7.

Das Spannfutter weist einen Grundkörper 2 auf, auf dem drei Spannelemente 5 in gleichen Winkelabständen zueinander angeordnet sind. Die Spannelemente 5 bestehen aus einer Spannbacke 51, mit der das Werkstück eingespannt wird, einem Stempel 52, einer Hülse 53 und einem Spannklotz 54.

Die Stempel 52 weisen auf ihrer der Spannbacke 51 abgewandten Seite eine schiefe Ebene 50 auf, über die sie mit den Spannklötzen 54 in Verbindung stehen. Auf der gegenüberliegenden Seite der Spannklötze 54 ist eine Bandage 7 aufgelegt, die die Spannklötze 54 sämtlicher drei Spannelemente 5 umfaßt.

Zum Einstellen der Spannkraft ist ein Spannring 6 vorgesehen, der über ein Gewinde mit dem Grundkörper 2 verbunden ist, und bei dessen Drehung die Spannklötze 54 der Spannelemente 5 verschoben werden.

Zwischen den Spannelementen 5 sind an der Bandage 7 Fliehkraft-Ausgleichsgewichte 8 angeordnet, die so geführt sind, daß sie sich zusammen mit der Bandage 7 aus Faserverbundkunststoff in radialer Richtung bewegen können, in tangentialer Richtung jedoch vom Grundkörper 2 gefesselt sind.

Nachstehend soll der konstruktive Aufbau sowie die Wirkungsweise des in den Figuren 7 und 8 dargestellten Spannfutters näher erläutert werden.

Das nicht näher dargestellte Werkstück wird durch die drei Spannbacken 51 der Spannelemente 5 umfaßt. Der Kraftschluß in radialer Richtung läuft über die Spannbacken 51, den Stempel 52 aus Faserverbundkunststoff und den Spannklotz 54 zur Bandage 7 aus Faserverbundkunststoff. Die Bandage 7 ist in Dreiecksform zwischen den drei Spannklötzen 54 der Spannelemente 5 angeordnet. Die Fasern der Bandage 7 liegen nur in einer Richtung vor. Die Faserorientierung ist dabei so gewählt, daß die Faserlängsrichtung von Spannklotz 54 zu Spannklotz 54 gerichtet ist und die Spannklötze 54 tangential berührt werden. Durch diese Faseranordnung ist sichergestellt, daß die in Faserlängsrichtung günstigen Festigkeits- und Steifigkeitseigenschaften der Fasern ausgenutzt werden.

Tangentiale Kräfte werden über die Spannbacken 51, den Stempel 52 und die Hülse 53 der Spannelemente 5 vom Werkstück auf den Grundkörper 2 und weiter auf die Spindel der Drehmaschine übertragen.

Der Spannmechanismus des in den Figuren 7 und 8 dargestellten Spannfutters ist so ausgelegt, daß die Spannklötze 54 über die schiefe Ebene 50 die Stempel 52 berühren. Durch eine axiale Bewegung des Spannringes 6 werden die Spannklötze 54 vom Grundkörper 2 weg bewegt, und die Stempel 52 und Spannbacken 51 der Spannelemente 5 werden in radialer Richtung zum Zentrum des Grundkörpers 2 hin bewegt, wodurch die Vorspannung zwischen der Bandage 7 aus Faserverbundkunststoff und dem Werkstück aufgebaut wird.

Die Berührungsflächen zwischen dem Spannring 6 und den Spannklötzen 54 sind so angeordnet, daß die Berührungsebene normal zur Achsrichtung der Drehachse des Spannfutters liegt. Dadurch ist sichergestellt, daß eine auftretende radiale Aufweitung des Spannrings 6 keinen Einfluß auf die Position der Spannklötze 54 und damit auf die Spannkraft hat. Das Gewinde zur axialen Verschiebung des Spannringes 6 ist als Sägezahngewinde ausgeführt, wobei die zur Futterachsrichtung normalen Flankenflächen zur Bandage 7 aus Faserverbundkunststoff hinweisen. Damit ist sichergestellt, daß eine radiale Aufweitung des Spannringes zu keiner Bewegung in axialer Richtung führt.

Die Wirkungsweise der Fliehkraft-Ausgleichsgewichte 8 besteht darin, daß bei zunehmender Drehzahl und damit nach außen zunehmender Fliehkraft die Bandage 7 aus Faserverbundkunststoff nach außen bewegt wird. Da die Bandage 7 aus hochsteifer Kohlenstoffaser hergestellt ist, tritt nur eine geringe Dehnung auf, und die Spannung auf die Spannklötze 54 und das Werkstück in radialer Richtung wird durch die Verformung der Bandage 7 aus Faserverbundkunststoff nach außen erhöht. Dieser Effekt tritt in geringerem Maße auch ohne zusätzlich angebrachte Fliehkraft-Ausgleichsgewichte 8 durch die Fliehkraftauslenkung der Bandage 7 aus Faserverbundkunststoff auf.

Durch die Verwendung von Hochleistungs-Faserverbundkunststoffen in Werkzeugmaschinen können die Bearbeitungsgrenzen deutlich gesteigert werden. Vorteile ergeben sich bei sehr hohen Drehzahlen und bei dynamischen Problemen, da sich die Hochleistungsfaserverbundkunststoffe vor allem durch ihre massespezifischen Festigkeiten und Steifigkeiten auszeichnen. Am Beispiel eines Spannfutters für die Hochgeschwindigkeitsdrehbearbeitung werden Möglichkeiten durch eine Substitution und integrierte Vorgehensweise bei der Verwendung von Faserverbundkunststoffen aufgezeigt. Der Vorteil der Substitution besteht in der Weiterverwendung vorhandener Komponenten, jedoch sind Leistungssteigerungen nur innerhalb enger Grenzen zu erreichen. Bei der integrierten Vorgehensweise können die Leistungsgrenzen wesentlich erhöht werden, allerdings ist die Neukonzeption des Systems unter Berücksichtigung der fasergerechten Konstruktion notwendig.

## Patentansprüche

1. Spannsystem für Werkzeugmaschinen zum Einspannen von rotationsorientierten Werkzeugen und/oder Werkstücken mit einem metallischen Futter- oder Grundkörper (2), einem metallischen Spanngetriebe (10, 11) und metallischen Grundbacken (3) sowie mit den Grundbacken (3) verbundenen Aufsatzbacken (4),
**dadurch gekennzeichnet**,
daß die Aufsatzbacken (4) einen Laminatblock (40, 46, 48) aus Faserverbundkunststoff aufweisen, der mittels in Schlaufen um den Laminatblock gelegten Bandagen (17, 18) aus Faserverbundkunststoffen mit einem die Schnittstelle zu den Grundbacken (3) bildenden Metalleinsatz (47) verbunden ist.

2. Spannsystem nach Anspruch 1, **dadurch gekennzeichnet**, daß der Laminatblock (40, 46, 48) an der Spannfläche (42) zum Werkstück oder Werkzeug mit einem Metalleinsatz, vorzugsweise einem Stahleinsatz, versehen ist.

3. Spannsystem nach Anspruch 1, **dadurch gekennzeichnet**, daß die der Grundbacke (3) abgewandte Fläche des Laminatblocks (48) abgeschrägt ist und einen Steigungswinkel (m) von vorzugsweise 15° mit der der Grundbacke (3) zugewandten Fläche bildet und daß beabstandet zueinander Bohrungen zur Aufnahme von Befestigungselementen (19, 21) unterschiedlicher Länge vorgesehen sind.

4. Spannsystem nach Anspruch 2 oder 3, **dadurch gekennzeichnet**, daß der Laminatblock (46, 48) zu einem Faserverbund aus Faserschichten aufgebaut ist, die Orientierungswinkel von +/- 45° und 0° aufweisen, und daß die Faserschichten so angeordnet sind, daß die Einzelschichten senkrecht zum Futterkörper radial ausgerichtet sind.

5. Spannsystem nach mindestens einem der vorangehenden Ansprüche mit mehreren, das Werkstück oder Werkzeug umfassenden Spannelementen (5), die in radialer Richtung beweglich auf einem Futterkörper (2) angeordnet sind und zumindest teilweise aus Faserverbundkunststoffen (46; 52 bis 54) bestehen, **dadurch gekennzeichnet**, daß eine Bandage (7) aus Faserverbundkunststoffen um die dem Werkstück oder Werkzeug (9) abgewandten Rückseiten der Spannelemente (5) angeordnet ist.

6. Spannsystem nach Anspruch 5, **dadurch gekennzeichnet**, daß die Faserlängsrichtung der Bandage (7) aus Faserverbundkunststoffen von Spannelement (5) zu Spannelement (5) ausgerichtet ist.

7. Spannsystem nach Anspruch 5 oder 6, **dadurch gekennzeichnet**, daß die Bandage (7) aus Faserverbundkunststoffen die Spannelemente (5) tangential berührt.

8. Spannsystem nach mindestens einem der Ansprüche 5 bis 7, **dadurch gekennzeichnet**, daß an der Bandage (7) aus Faserverbundkunststoffen zwischen den Spannelementen (5) Fliehkraft-Ausgleichsgewichte (8) so angeordnet sind, daß sie zusammen mit der Bandage (7) aus Faserverbundkunststoffen in radialer Richtung beweglich und in tangentialer Richtung festgelegt sind.

9. Spannsystem nach mindestens einem der Ansprüche 5 bis 8, **dadurch gekennzeichnet**, daß die Spannelemente (5) auf einem metallischen, mit einer Spindel verbundenen Grundkörper (2) angeordnet sind und aus zumindest teilweise aus Faserverbundkunststoffen aufgebauten, radial beweglichen Spannbacken (51), Stempeln (52) und Hülsen (53) sowie axial beweglichen Spannklötzen (54) bestehen, daß die Spannklötze (54) einerseits an einem axial beweglichen Spannring (6) und andererseits über eine schiefe Ebene an den Stempeln (52) der Spannelemente (5) anliegen, derart, daß bei einer axialen Bewegung des Spannringes (6) die Spannklötze (54) vom Grundkörper (2) wegbewegt und die Spannelemente (5) in radialer Richtung zum Mittelpunkt des Grundkörpers (2) bewegt werden.

## Claims

1. Clamping system for machine tools for clamping rotation-orientated tools and/or workpieces with a metal chuck or foundation body (2), a metal tension gearing (10,11) and metal base jaws (3) as well as mounting jaws (4) connected to the base jaws (3) characterised in that the mounting jaws (4) have a laminate block (40, 46,48) of fibre compound plastics which is connected by means of bandages (17,18) of fibre compound plastics placed in loops round the laminate block to a metal insert (47) forming the intersection with the base jaws (3).

2. Clamping system according to claim 1 characterised in that the laminate block (40, 46,48) is provided with a metal insert, preferably a steel insert, on the clamping face (42) with the workpiece or tool.

3. Clamping system according to claim 1 characterised in that the face of the laminate block (48) remote from the base jaw (3) is inclined and forms a gradient angle (m) of preferably 15° with the surface facing the base jaw (3) and that bores are provided spaced from each other for holding fixing elements (19,21) of different length.

4. Clamping system according to claim 2 or 3 characterised in that the laminate block (46, 48) is built into a fibre compound of fibre layers which have orientation angles of ± 45° and 0° and that the fibre layers are arranged so that the individual layers are aligned radially at right angles to the chuck body.

5. Clamping system according to at least one of the preceding claims with several clamping elements (5) enclosing the workpiece or tool and which are arranged in the radial direction movable on a chuck body (2) and consist at least in part of fibre compound plastics (46;52 to 54) characterised in that a bandage (7) of fibre compound plastics is mounted around the backs of the clamping elements (5) remote from the workpiece or tool (9).

6. Clamping system according to claim 5 characterised in that the longitudinal fibre direction of the bandage (7) of fibre compound plastics is aligned from clamping element (5) to clamping element (5).

7. Clamping system according to claim 5 or 6 characterised in that the bandage (7) of fibre compound plastics contacts the clamping elements (5) tangentially,.

8. Clamping system according to at least one of claims 5 to 7 characterised in that centrifugal force compensating weights (8) are arranged on the bandage (7) of fibre compound plastics between the clamping elements (5) so that they are movable radially together with the bandage (7) of fibre compound plastics and fixed in the tangential direction.

9. Clamping system according to at least one of claims 5 to 8 characterised in that the clamping elements (5) are mounted on a metal base body (2) connected to a spindle and consist of radially movable clamping jaws (51) made at least in part of fibre compound plastics, rams (52) and sleeves (53) as well as axially movable clamping blocks (54), that the clamping blocks (54) on one side adjoin an axially movable tension ring (6) and on the other side adjoin the rams (52) of the clamping elements (5) through a sloping plane so that during axial movement of the tension ring (6) the clamping blocks (54) are moved away from the base body (2) and the clamping elements (5) are moved in the radial direction to the centre point of the base body (2).

## Revendications

1. Système de serrage pour machines-outils pour serrer des outils et/ou des pièces à usiner orientées en rotation, comportant un corps de mandrin ou corps de base métallique (2), un mécanisme métallique de serrage (10,11) et des mors de base métalliques (3) ainsi que des mors rapportés (4) reliés aux mors de base (3),
caractérisé en ce
que les mors rapportés (4) possèdent un bloc stratifié (40, 46,48) formé d'une matière plastique composite formée de fibres, qui est reliée, au moyen de bandages (17,18) qui sont disposés selon des boucles autour du bloc stratifié et sont formés de matière plastique formée de fibres, à un insert métallique (47) formant l'interface avec les mors de base (3).

2. Système de serrage selon la revendication 1, caractérisé en ce que le bloc stratifié (40,46,48) comporte, au niveau de la surface de serrage (42) s'appliquant contre la pièce à usiner ou l'outil, un insert métallique, de préférence un insert en acier.

3. Système de serrage selon la revendication 1, caractérisé en ce que la surface du bloc stratifié (48), tournée à l'opposé du mors de base (3), est biseautée et est incliné d'un angle (m) égal de préférence à 15° par rapport à la surface tournée vers le mors de base (3), et que des perçages distants les uns des autres sont prévus de manière à loger des éléments de fixation (19,21) ayant des longueurs différentes.

4. Système de serrage selon la revendication 2 ou 3, caractérisé en ce que le bloc stratifié (46,48) est agencé sous la forme d'un matériau composite constitué de couches de fibres, qui possède un angle d'orientation de +/- 45° et 0°, et que les couches de fibres sont disposées de telle sorte que les couches individuelles sont orientées radialement perpendiculairement au corps du mandrin.

5. Système de serrage selon au moins l'une des revendications précédentes comportant plusieurs éléments de serrage (5), qui entourent la pièce à usiner ou l'outil et sont disposés de manière à être déplaçables dans la direction radiale sur un corps de mandrin (2) et sont constitués au moins en partie par des matières plastiques composites formées de fibres (46;52 à 54), caractérisé en ce qu'un bandage (7) formé de matières plastiques composites formées de fibres est disposé autour des côtés arrière des éléments de serrage (5), tournés à l'opposé de la pièce à usiner ou de l'outil (9).

6. Système de serrage selon la revendication 5, caractérisé en ce que la direction longitudinale des fibres du bandage (7) constituées par des matières plastiques composites formées de fibres s'étend d'un élément de serrage (5) vers un élément de serrage (5).

7. Système de serrage selon la revendication 5 ou 6, caractérisé en ce que le bandage (7) constitué de matières plastiques composites formées de fibres touche tangentiellement les éléments de serrage (5).

8. Système de serrage selon au moins l'une des revendications 5 à 7, caractérisé en ce que des contrepoids (8) compensant la force centrifuge sont disposés sur le bandage (7) constitué de matières plastiques composites formées de fibres contre les éléments de serrage (5) de sorte qu'ils sont déplaçables dans la direction radiale conjointement avec le bandage (7) constitué de matières plastiques composites formées de fibres et sont fixés dans une direction tangentielle.

9. Système de serrage selon au moins l'une des revendications 5 à 8, caractérisé en ce que les éléments de serrage (5) sont disposés sur un corps de base métallique (2) relié à une broche et sont constitués par des mors de serrage (51), des poussoirs (52) et des douilles (53), qui sont mobiles radialement et sont constitués au moins en partie par des matières plastiques composites formées de fibres, ainsi que par des sabots de serrage (54) mobiles axialement, que les sabots de serrage (54) s'appliquent d'une part contre une bague de serrage (6) déplaçable axialement et d'autre part, par l'intermédiaire d'un pan oblique, contre les poussoirs (52) des éléments de serrage (5) de telle sorte que, lors d'un déplacement axial de la bague de serrage (6), les blocs de serrage (54) sont écartés du corps de base (2) et que les éléments de serrage (5) sont déplacés dans une direction radiale en direction du centre du corps de base (2).
